# EUROPEAN PATENT APPLICATION

(11) **EP 3 312 690 A1**
(43) Date of publication of application: **25.04.2018**
(21) Application number: 17197267.2
(22) Date of filing: 19.10.2017
(51) Int. Cl.: G05B 19/404

(54) **VIBRATION DAMPING SYSTEM FOR AN MACHINING HEAD OF A MACHINE TOOL AND CORRESPONDING OPERATING HEAD**

(30) Priority: 19.10.2016 IT 201600105106
(71) Applicant: HSD S.p.A., 61100 Pesaro (IT)
(72) Inventor: DRUDI, Gianluca Paolo, 61100 PESARO (IT); GROSSO, Giuseppe, 61100 PESARO (IT)
(74) Representative: Manconi, Stefano

(57) **Abstract**

A vibration damping system for an operating head for a machine tool, the vibration damping system (1) comprising at least one accelerometer (2), which can be mounted in a fixed manner on the operating head (5) so as to generate at least one signal (SA) indicating first vibrations (VI) of the operating head (5), at least one piezoelectric actuator (3), which can be mounted in a fixed manner on the operating head (5) so as to generate second vibrations (V2) on the operating head (5), and processing and control means (4), which are configured to determine frequencies and amplitudes of said first vibrations (VI) relative to a three-dimensional reference system based on said signal (SA) and to control in real time said piezoelectric actuator (3) so that said second vibrations (V2) have, relative to said reference system, same frequencies and amplitudes as said first vibrations (VI) and phases that are opposite to those of said first vibrations (VI).

## Description

The present invention relates to a vibration damping system for an operating head of a machine tool and to a corresponding operating head.

In particular, the present invention finds advantageous, but not exclusive, application in machine tools for machining metal parts, comprising at least one operating head provided with an electrospindle, to which the following description will make an explicit reference without loss of generality.

Machine tools for machining metal parts, such as e.g. milling machines or machines with multi-degree-of-freedom heads, normally comprise one or more operating heads, each of which includes a respective electrospindle suited to cause the rotation of a respective tool, such as e.g. a milling cutter or a drill bit.

During the machine tool operation, the contact of the rotating tool with the metal workpiece generates vibrations that are transmitted partly to the operating head and partly to the metal workpiece. The vibrations transmitted to the operating head stress the moving elements, such as the bearings and the motion-transmitting elements, thereby increasing over time the wear and thus the reliability of these elements. The vibrations transmitted to the workpiece worsen the machining accuracy and thus the overall finish of the machined workpiece. Moreover, the produced vibrations generate noise.

The object of the present invention is to provide a vibration damping system for an operating head of a machine tool, said system being free of the aforesaid drawbacks and at the same time being easy and inexpensive to manufacture.

According to the present invention, there are provided a vibration damping system for an operating head of a machine tool and an operating head, as defined in the appended claims.

The present invention will now be described with reference to the accompanying drawings illustrating an example of a non-limiting embodiment, wherein:
- Figure 1 shows a block diagram of the vibration damping system made according to the teaching of the present invention; and
- Figures 2 to 4 show, according to a same side view, an operating head of a machine tool comprising the vibration damping system according to respective embodiments of the present invention.

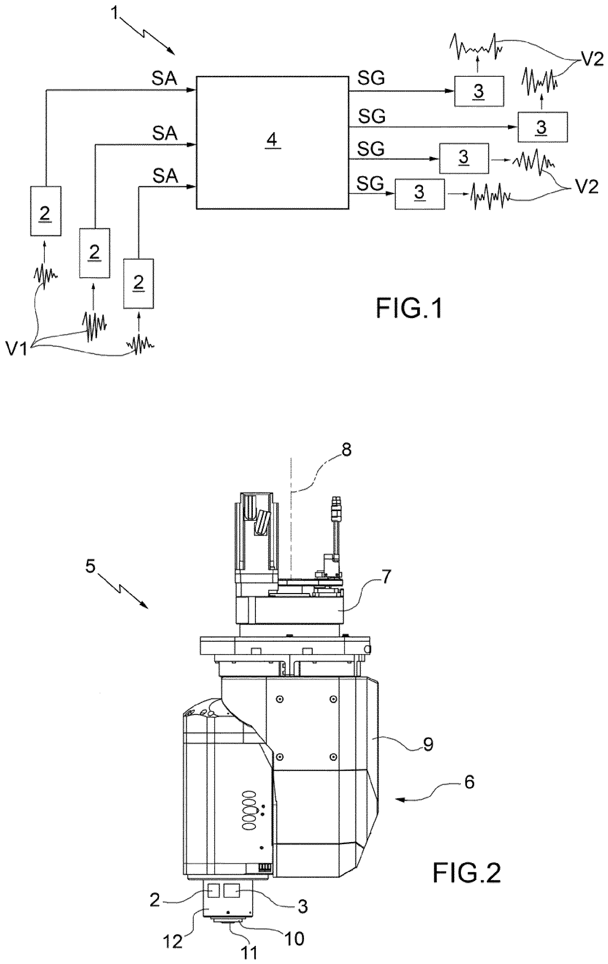

In Figure 1, numeral 1 generically indicates, as a whole, the vibration damping system of the present invention. The vibration damping system 1 comprises one or more accelerometers 2, each of which is mounted in a fixed manner on an operating head (not shown) of a machine tool so as to generate at least one electrical signal SA indicating vibrations V1 of the operating head during its operation, one or more piezoelectric actuators 3, each of which is mounted in a fixed manner on the operating head so as to generate vibrations V2 transmitted to the operating head, and an electronic control unit 4, which receives the signals SA from the accelerometers 2 and is configured to process the signals SA so as to determine frequencies and amplitudes of the vibrations V1 along the axes of a three-dimensional reference system, e.g. a Cartesian reference system, and to generate electrical control signals SG suited to control in real time the piezoelectric actuators 3 so that the vibrations V2 have, relative to said reference system, same frequencies and amplitudes as said vibrations V2 and phases that are opposite to those of said first vibrations V1.

The processing of the signals SA and the corresponding generation of the signals SG is performed by the electronic control unit 4 in a substantially continuous manner, namely with a time periodicity selectable in a range comprised between 0.1 ms and 2 s. The periodicity of the signal processing is selected according to the spectrum (frequency distribution) of the vibrations V1. The vibrations V2 generated in counter-phase with respect to the vibrations V1 measured by the accelerometers 2 reduce the amplitude of the vibrations V1 measured during the following cycle. In other words, although it has an open loop control structure, the vibration damping system 1 is inherently a closed loop system, because it is back-fed by the mechanical system constituted by the operating head vibrating during its operation.

The accelerometers 2 and the piezoelectric actuators 3 are connected to the electronic control unit 4 by respective electrical wiring or by means of wireless interfaces.

Advantageously, the vibration damping system 1 comprises a single accelerometer 2 with multiple acceleration detection axes, preferably constituted by a triaxial accelerometer, or by a plurality of monoaxial accelerometers 2, and in particular by three monoaxial accelerometers 2, suited to be mounted with respective detection axes that are not parallel to each other, preferably lying on planes that are orthogonal to each other. Substantially, the accelerometers 2 implement several acceleration detection axes.

Advantageously, the reference system used by the electronic control unit 4 is a Cartesian reference system with its own axis that coincides with a detection axis of one of the accelerometers 2.

Advantageously, the number of piezoelectric actuators 3 is at least equal to the number of detection axes of the accelerometers 2, since each piezoelectric actuator 3 generates vibrations V2 along a single respective vibration-generating axis.

Figure 2 shows an operating head 5 of a machine tool (not shown). The operating head 5 comprises an electrospindle 6 and a rotating support member 7, which supports the electrospindle 6 and connects it to the machine tool rotatably about an axis 8 to allow the tilting of the operating head 5. The electrospindle 6 comprises a main body 9, which houses an electric motor (not shown), a spindle 10, which is provided with a respective clamping device 11 for a tool (not shown) and is rotated by said electric motor, and a support neck 12, which is integral to the main body 9 and coaxial to the spindle 10 so as to support the spindle 10. The main body 9 and the support neck 12 are portions of an outer casing of the spindle 6.

With reference to Figure 2, according to the invention, the operating head 5 comprises the vibration damping system 1, which comprises a triaxial accelerometer 2 mounted in a fixed manner on the support neck 12, i.e. in the casing portion of the electrospindle 6 closest to the clamping device 11, and at least a piezoelectric actuator 3, also mounted in a fixed manner on the support neck 12. The electronic control unit 4 is not shown in Figure 2 because its mounting position is irrelevant to its operation: it can be mounted on the machine tool, on the main body 9, separately with respect to the accelerometers 2 and the piezoelectric actuators 3, or arranged within the container of an accelerometer 2 or of a piezoelectric actuator 3.

Advantageously, the reference system used by the control unit 4 is a Cartesian reference system, whose axes coincide with the three accelerometer detection axes 2. This simplifies the processing of the signals SA to determine amplitude and frequency of the vibrations V1.

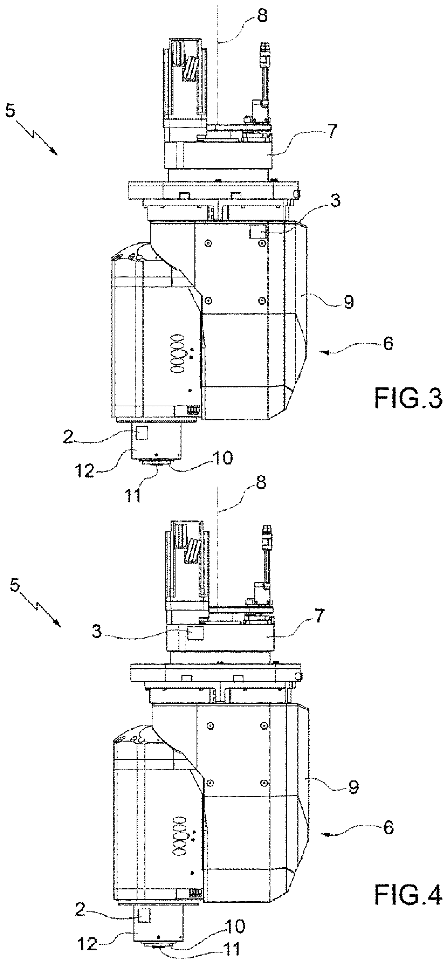

According to a further embodiment of the present invention shown in Figure 3, wherein corresponding elements are indicated by the same numbers and symbols of Figure 2, the piezoelectric actuator 3 is mounted in a fixed manner on the main body 9.

According to a further embodiment of the present invention shown in Figure 4, wherein corresponding elements are indicated by the same numbers and symbols of Figure 2, the piezoelectric actuator 3 is mounted in a fixed manner on the rotating support member 7.

Advantageously, the piezoelectric actuator 3 is mounted on the support neck 12 (Figure 2) or on the main body 9 (Figure 3) or on the rotating support member 7 (Figure 4) with its own vibration-generating axis parallel to one of the accelerometer detection axes 2. This simplifies the calculation of the signal SG to be applied to the piezoelectric actuator 3.

According to a further non-shown embodiment of the invention, the vibration damping system 1 comprises a triaxial accelerometer 2 mounted as in Figures 2 to 4, and a plurality of piezoelectric actuators 3, preferably three, all mounted on the support neck 12, or on the main body 9, or on the rotating support member 7, with respective vibration-generating axes lying on respective planes that orthogonal to each other, each of them being preferably parallel to one respective accelerometer detection axis 2. This allows reaching more rapidly a minimum of vibrations V1 without overly complicating, at the same time, the calculation of the signals SG to be applied to respective piezoelectric actuators 3.

According to non-shown further embodiments of the present invention, the vibration damping system 1 of the operating head 5 comprises a plurality of piezoelectric actuators 3 mounted on different parts of the outer casing of the electrospindle 6, namely not all of them on the main body 9, on the support neck 12 or on the rotating support member 7, the mounting parts of each piezoelectric actuator being selected according to their frequency and amplitude response to the variation of the vibrations V1 and/or of the amount of material of the components and of the mechanical inertia of the rotating parts of the operating head 5.

Although the above invention specifically refers to a well-defined embodiment, it is not to be considered as limited to this embodiment, since it includes within its scope all those variants, modifications or simplifications that would be apparent to the person skilled in the art, such as e.g. three axial accelerometers mounted close together, i.e. on the main body 9 or on the support neck 12 or on the rotating support member 7 with their respective detection axes lying on respective orthogonal planes, instead of the single triaxial accelerometer.

Moreover, the invention is advantageously applicable to machine tools for machining pieces of any material, such as metal or wood, and in particular to machine tools comprising operating heads provided with spindles for rotating respective drill bits or milling cutters suitable for machining such material.

The main advantage of the aforesaid vibration damping system 1 is that it is easily configurable with regard to the number and positioning of the accelerometers and of the piezoelectric actuators, and therefore easily adaptable to any type of operating head including a spindle to cause the rotation of tools.

## Claims

1. A vibration damping system for an operating head for a machine tool, the vibration damping system (1) comprising at least one accelerometer (2), which can be mounted in a fixed manner on the operating head (5) so as to generate at least one signal (SA) indicating first vibrations (V1) of the operating head (5), at least one piezoelectric actuator (3), which can be mounted in a fixed manner on the operating head (5) so as to generate second vibrations (V2) on the operating head (5), and processing and control means (4), which are configured to determine frequencies and amplitudes of said first vibrations (V1) relative to a three-dimensional reference system based on said signal (SA) and to control in real time said piezoelectric actuator (3) so that said second vibrations (V2) have, relative to said reference system, same frequencies and amplitudes as said first vibrations (V1) and phases that are opposite to those of said first vibrations (V1).

2. A vibration damping system according to claim 1, wherein said at least one accelerometer (2) is of the type with different detection axes or comprises a plurality of accelerometers (2), each comprising a respective single detection axis.

3. A vibration damping system according to claim 1 or 2, wherein said at least one accelerometer (2) comprises at least one detection axis, which coincides with an axis of said reference system.

4. An operating head for a machine tool, the operating head (5) comprising an outer casing (9, 12) and being **characterized in that** is comprises a vibration damping system (1) according to any one of the previous claims, said at least one accelerometer (2) and at least one piezoelectric actuator (3) being mounted in a fixed manner on the outer casing (9, 12).

5. An operating head according to claim 4 and comprising a spindle (10); said outer casing (9, 12) comprising a main body (9), which houses an electric motor suited to cause the rotation of the spindle (10), and a support neck (12), which is integral to the main body (9) so as to support the spindle (10); said at least one accelerometer (2) being mounted on said support neck (12).

6. An operating head according to claim 4 or 5 and comprising a spindle (10); said outer casing (9, 12) comprising a main body (9), which houses an electric motor suited to cause the rotation of the spindle (10), and a support neck (12), which is integral to the main body (9) so as to support the spindle (10); said at least one piezoelectric actuator (3) being mounted on said support neck (12).

7. An operating head according to any one of the claims from 4 to 6, wherein said vibration damping system (1) is according to claim 3 and said at least one piezoelectric actuator (3) comprises a respective vibration-generating axis; said at least one accelerometer (2) and said at least one piezoelectric actuator (3) being mounted on said outer casing (9, 12) so that said vibration-generating axis is parallel to said detection axis.

8. An operating head according to any one of the claims from 4 to 7, wherein said at least one piezoelectric actuator (3) comprises a plurality of piezoelectric actuators (3), which are mounted on said outer casing (9, 12) in such a way that the respective vibration-generating axes lie on respective planes that are orthogonal to one another.

9. An operating head according to any one of the claims from 4 to 8, wherein said operating head comprises an electrospindle (6); said spindle (10), outer casing (9, 12) and motor belonging to said electrospindle (6).
